# EUROPEAN PATENT APPLICATION

(11) **EP 2 328 355 A1**
(43) Date of publication of application: **01.06.2011**
(21) Application number: 09177287.1
(22) Date of filing: 27.11.2009
(51) Int. Cl.: H04Q 3/00, H04L 29/06

(54) **Automated service migration**

(71) Applicant: Koninklijke KPN N.V., 2516 CK The Hague (NL)
(72) Inventor: Veenstra, Pieter, 2518 HR, The Hague (NL); Jannink, Hendrikus, 2631 TA, Nootdorp (NL)

(57) **Abstract**

A method and a system for automated service migration from a first network to a second network is described, wherein the first network is connected to a Residential Network Access Device (RNAD) via a first type of signaling, with electromagnetic properties representative of the first network. The second network comprises an User Agent (UA) Registration and Management Module (RMM) communicatively connected to a routing database and the RNAD comprises a User Agent (UA) and is configured for switching between a first signaling processing modus and a second signaling processing modus The method comprises the steps of:
- switching the RNAD to the second signaling processing modus through transmitting to the RNAD a second type of signaling with electromagnetic properties, representative of the second network;
- in response to the modus switch, activating and configuring the UA and registering the UA with the RMM;
- following the activation of the UA, updating the routing database, so that the RNAD may be reached via the second network.

## Description

### Field of the invention

The invention relates to migrating communication services, in particular, though not exclusively, to a method and system for automated migration of PSTN services to a NG VoIP based network. The invention further relates to certain network elements, used in the invention.

### Background of the invention

The implementation of Voice over IP (VoIP) technology by telecom operators in their networks makes it possible for both customer and operator to benefit from substantial cost savings. In addition VoIP enables a variety of new so-called converged services that were previously not available. This provides for additional revenue potential from an operator/vendor perspective. It is for those reasons that operators are building Next Generation (NG) VoIP networks and are introducing VoIP based services in the market.

The greatest benefits for operators are realized when as many customers as possible, which are currently making use of the legacy network, are migrated swiftly and efficiently to the new NG VoIP based network. This has the advantage that legacy equipment can be disconnected and building space can be freed up for other purposes. Furthermore substantial savings can be made on power consumption and network management.

With the existing and known migration methods, operators are often confronted with very complex and sensitive migration processes. This especially applies if there is a desire to minimize the disruption of the voice service during the migration process, when for example large numbers of customers need to be migrated at once as part of a large shut-down action of parts of the legacy telephony network, such as the removal of a PSTN switch, the emptying of a building, housing legacy equipment, etc. This requires careful planning actions in order to have an ordered sequence of the migration actions, whereby critical timing of the consecutive process steps is crucial to guarantee a smooth migration process with minimal outage time and minimal disruption risks of the voice service for the customers involved.

Another disadvantage of existing methods is that customers asking for a NG VoIP based service, need to undertake actions themselves, in order to align the in-house installation process of the residential network access device (RNAD) with the migration actions in the operator network before the new service becomes active. Typically the customer installation process requires the execution of e.g. a 'happy call' and/or a specific action by maintenance personnel in order to trigger a process in the central call routing system of the operator before the customer will be able to also receive calls via the NG VoIP platform. These actions, that require customer involvement, are particularly undesirable for customers that are not familiar with technical matters, or that assume the same automated and reliable working of the NG VoIP based service as they are used to of the PSTN service, or that are not co-operative with the migration efforts imposed by the telecom operator.

Yet another disadvantage of existing methods is that when the operator wants to perform an operator driven migration of parts of the legacy network to a new VoIP based network, for example because he wants to downsize floor space and limit power consumption by replacing old equipment with smaller and less consuming new equipment, he can only do so when all customers connected to such legacy equipment are migrated to the VoIP based network. The unwillingness of certain customers to migrate to the new VoIP service may cause large delays in this migration process.

An example of a semi-automated state-of-the art migration method is disclosed in US20080159273A1. A method is described for the migration of customers having an analog phone and a VOIP phone, whereby the line-per-line customer initiated migration is mediated through a functional element called a VoIP migration broker.

Although this method does provide a reasonable level of automation, and for example does no longer require the presence of a telecom engineer at the customer premises at the moment of migration, which used to be the case with older methods, it does require customer involvement through e.g. a happy call. Furthermore it provides no solution for an operator dictated removal of legacy equipment, independent of customer premises related activities. This has the disadvantage that for example the PSTN exchange and/or other PSTN related equipment needs to stay active and cannot be shut-down until the last PSTN customer is migrated, the migration requiring the active involvement of the customer. In addition, this prior art method assumes the simultaneous presence of two different connected (wired) phones at the customer premises. This may require a splitter or may not always be possible at all. For instance in case the customer wants to continue using his old phone, in the manner he was used to, a migration based on a splitter, simultaneously connecting two phones, is simple not feasible at all. Another disadvantage of prior art methods, is that, in case the access to the customer premises is a copper line, both PSTN and ADSL may need to be active on the same copper line for a prolonged period. This may also require (temporarily) additional capacity on network equipment such as the Main Distribution Frame (MDF).

In the co-pending application EP1912411 (A1) "Method and system for service preparation of a residential network access device", the automated provisioning of a residential network access device, upon connecting to a VoIP based network, is described. This method may be used for migrating to a VoIP based network, but has the disadvantage that existing legacy PSTN services need to be interrupted, when switching to the VoIP service, since the applied residential network access device does not work in combination with a legacy PSTN network. Therefore this method does require close co-operation between operator and customer and synchronization of activities in the operator network with activities at the customer premises, which may be disadvantageous in certain situations.

### Summary of the invention

It is an object of the invention to reduce or eliminate at least one of the drawbacks known in the prior art. The invention is based on an insight that a specific type of Residential Network Access Device (RNAD) is placed in between a user terminal (such as a phone, fax) and an operator's network. This RNAD has the advantage that it is capable of processing different types of signaling with different electromagnetic properties, representative of different networks. Furthermore this RNAD is capable of outputting to the user terminal signaling of the type that can be processed by the user terminal. A user may therefore still use his legacy terminal when connected via such a RNAD to a legacy network. In this particular situation the RNAD is transparent to the bidirectional signaling that takes place between the legacy terminal and the legacy network.

The invention is based on a further insight that whenever an operator migrates services from a first network to a second network (for instance from a circuit switched network or CSN to a packet switched network or PSN), the RNAD is capable of noticing this migration, by detecting the presence at the RNAD of signaling with electromagnetic properties representative of the second communication network. The RNAD used in the invention is furthermore capable of processing this other type of signaling. The RNAD may further comprise emulating functionality (software), that may be downloaded to, and/or activated in the RNAD. This functionality assures that the signaling received by the RNAD from the second network is converted into and outputted towards the legacy terminal as a signal of the type, representative of the first network (and vice versa). By placing such a RNAD at the customer premises, the operator may simply migrate at its convenience services from one network to another network (technology), without needing any co-operation from the user anymore. For migrating to a VoIP based network in particular (though not exclusively) further actions in the network and/or in the RNAD may be required. This may include for instance the updating of a routing database. The invention is further based around the concept that such activities may all be automated without requiring user assistance or interference. This is both convenient for the user, which is not bothered by the migration, and for the operator, which can for instance move to a more efficient network (technology), at its convenience, and without being dependent on user co-operation.

It is an aim to provide, in a first aspect of the invention a method for automated service migration from a first network, preferably a circuit switched network (CSN) to a second network, preferably a packet switched network (PSN). The first network is connected to a Residential Network Access Device (RNAD) via a first type of signaling, representative of the first network. The second network comprises an User Agent (UA) Registration and Management Module (RMM) communicatively connected to a routing database. The RNAD comprises an User Agent (UA) and is configured for switching between a first signaling processing modus, preferably a circuit switched signaling processing modus (CSSP) and a second signaling processing modus, preferably a packet switched signaling processing (PSSP) modus;

The method comprises the steps of; - switching the RNAD to the second signaling processing modus through transmitting to the RNAD a second type of signaling with electromagnetic properties, representative of the second network; - then, in response to the modus switch, activating and configuring the UA and registering the UA with the RMM; - following the activation of the UA, updating the routing database, so that the RNAD may be reached via the PSN.

The first network is preferably a PSTN network and the second network is preferably a VoIP based network. The services to be migrated are preferably legacy voice (POTS and ISDN) and fax services. The first network is connected to a Residential Network Access Device (RNAD) via a first type of signaling, with electromagnetic properties, representative of the first network. In case of a legacy voice network, the type of signaling may be representative of a circuit switched network. The RNAD in the default situation (prior to migration) is processing signaling with electromagnetic characteristics representative of the first network. This means that the RNAD in the default situation is transparent to this type of signaling. For instance when the first network is a circuit switched network (CSN), a legacy phone connected to the RNAD may use the circuit switched services (for instance POTS), in the same way as if the RNAD was not present.

The RNAD is further configured for automatically switching its modus to the second signaling processing modus, when it receives the type of signaling, with electromagnetic properties representative of the second network. The access medium used to transmit the signaling, may be a physical access medium, such as copperware or optical fiber. Alternatively it may be a wireless access medium (the ether). The electromagnetic properties of the signaling may dependent on the type of access medium used to transmit the signaling (e.g. light waves transmitted via optical fiber have different electromagnetic properties than electric signals transmitted via copperware). Alternatively signaling with different electromagnetic properties may be transmitted via the same access medium. For example GSM type signaling uses another part of the electromagnetic spectrum than Wimax, Wifi, UMTS or LTE type signaling. Even when a physical access medium such as copperware is used, various types of signaling with different electromagnetic properties may be transmitted over the same medium. For instance the circuit switched signaling, when transmitted over copperware, may use another part of the electromagnetic spectrum than packet switched signaling, when transmitted over the same wire. The RNAD according to the disclosed method and system, is configured to detect various types of signaling with different electromagnetic properties.

The RNAD further comprises a User Agent (UA) that may be activated when the RNAD is in this second signaling processing modus. The UA may be a configurable piece of software that may interact with the network on behalf of the user/subscriber. The UA may be needed for specific services that are implemented on the second network. An example of such a service is Voice over IP (VoIP).

The second network may comprise a User Agent (UA) Registration and Management Module (RMM), which is needed for registering activated user agents and managing the related subscriber accounts. The RMM may for instance be a VoIP application server (VoIP AS). At least the RMM needs to be communicatively connected to a routing database that manages the routing of traffic. The term 'communicatively connected to' in this context means that the routing database may be contacted directly by the RMM or indirectly via Operator Support Systems (OSS), when executing the step of updating the database according to an embodiment of the invention.

The RNAD automatically switches to the second signaling processing modus when signaling with electromagnetic properties representative of the second network is transmitted to the RNAD. For example in an embodiment when the physical access medium is a copper wire, the electromagnetic signaling in the lower band (frequency) is normally used for circuit switched services. The (start of) the transmission of signaling with electromagnetic properties representative of the second network to the RNAD, which in this embodiment is nothing more than putting a signal on the wire that uses the higher band (frequency) as with the well known Digital Subscriber Line (DSL) techniques like ADSL and VDSL, which higher band is used for packet switched services, is detected by the RNAD. Subsequently its internal circuitry is switched in order to be enabled to process the newly received type of signaling. In an embodiment the putting of the signal on the line (physical access medium) may be automatically achieved by merely patching the copper line on an active port to the second network, preferably a PSN, via a Main Distribution Frame (MDF). In other words: by connecting the physical access medium to a connection point of the second network, the signaling representative of the second network may be transmitted to the RNAD. In further embodiments the connection point may be a DSLAM or an Optical Distribution Frame (ODF), a Secondary Distribution Frame (SDF), or in general any place in the access network or any network node, where physical patching may logically take place.

As a result of the transmitting of the second type of signaling and subsequent modus switch (switch of the internal circuitry), the User Agent (UA) detects an electromagnetic signal on the (internal) circuit used for the second type of signaling and is activated as a result. The RNAD now starts transmitting activation requests in order to receive a network address, preferably an IP address, after which it becomes capable of receiving configuration data. When the UA inside the RNAD is configured by receiving configuration data, it will register itself with the RMM by sending a registration request. The registration may be used to authenticate and authorize the UA for access to services of the second network, preferably PSN services. At this point the UA is effectively already arranged for using part of the services of the second network, such as making outgoing calls.

In a last step, following the activation of the UA, the routing database is updated, so that the RNAD may now also be reached via the second network (preferably a PSN) and is no longer reachable via the first network (preferably a CSN). The updating of the routing database may be realized in various manners according to various embodiments. In one embodiment the activation request of the RNAD will directly trigger the updating of the routing database, such that the updating of the routing database is done in response to the activation of the UA. In another embodiment it is the registration request that will provide the trigger for the updating of the routing database, such that the updating of the routing database is done in response to the registration of the UA. In yet a further embodiment the subscriber/user makes a happy call to a Voice Response System (VRS), the receipt of such a call providing the trigger for updating the routing database, such that the updating of the routing database is done in response to a call to a VRS. After the automated updating has occurred, the UA may be able to receive calls via the second network, preferably a PSN, or other services (e.g. videoconferencing, chat services, etc) that require such an update.

In an embodiment the RMM is provisioned with user data for the corresponding UA account, in response to the activation of the UA. This automated step has the advantage that the RMM does not need to be pre-provisioned with all user data, since it may not be known a priori, at which moment which individual services (preferably Circuit Switched Services or CSS) and their corresponding subscriber or user accounts are migrated from the first to the second network. More than one RMM may need to be active and/or installed for the migration of all services (and subscriber/user accounts) and it may not be advantageous (efficient) to pre-install equipment that may not be used for a while. In a further aspect, the invention relates to a system arranged for automated service migration from a first network (preferably a CSN) to a second network (preferably a PSN), the system comprising at least a RNAD, configured for switching between a first signaling processing and a second signaling processing modus; a RMM, configured for executing the step of, in response to the activation or registration of an UA, sending a routing update request comprising information for the routing database so that the RNAD becomes reachable via the second network (preferably a PSN). The system further comprises a routing database communicatively connected to the RMM and configured for accepting and handling a routing update request, so that the RNAD may be reached via the second network (preferably a PSN). The routing database may receive the routing update request directly from the RMM, or, in an alternative embodiment, may receive the request via the Operator Support Systems (OSS).

In a further embodiment of the system according to the invention, the system comprises a module for managing the routing database, whereby the module is configured for executing at least the steps of, in response to the activation or registration of the UA, receiving a routing update request comprising routing information for the routing database - in response to said routing update request, updating the routing database with said routing information so that the RNAD may be reached via the second network (preferably a PSN). The addition of a separate module that manages the routing database may be advantageous, when the legacy database is incompatible with/does not accept direct messaging from the RMM. In these situations an intermediate module is required that makes the appropriate translation.

In yet a further embodiment, the system comprises a device manager, whereby the device manager is configured for executing at least the step of, in response to the activation of an UA, sending a routing update request comprising routing information for the routing database so that so that the RNAD may be reached via the second network (preferably a PSN).

The device manager handles the activation requests of the various devices. The user agent of the RNAD transmits these activation requests. The advantage of having a system with a device manager configured for executing the above step, is that the migration process may be speeded up. It is the device manager, that already detects in an early stage of the migration process that a user agent requests to become active and may therefore signal the routing database with routing information. The transition period, when the subscriber is both dependent on a first network (preferably a CSN) for incoming calls prior to a routing database update, and on a second network (preferably a PSN) for outgoing calls that do not require this update, may be advantageously minimized with a device manager with these capabilities.

In another aspect of the invention, a RMM is provided, configured for executing the step of, in response to the registration of an UA, sending a routing update request comprising routing information for the routing database so that the RNAD may be reached via the second network (preferably a PSN). In yet a further aspect of the invention, a module for managing the routing database is provided. The module is configured for executing at least the steps of, in response to the activation or registration of the UA, receiving a routing update request comprising routing information for the routing database in response to the receipt of said routing update request, updating the routing database with said routing information so that the RNAD may be reached via the second network (preferably a PSN).

The invention will be further illustrated with reference to the attached drawings, which schematically will show embodiments according to the invention. It will be understood that the invention is not in any way restricted to these specific embodiments.

### Brief description of the drawings

Fig. 1 depicts a simplified picture of an exemplary network situation after the basic preparations for migration have taken place.
Fig. 2 illustrates a simplified migration scenario according to one embodiment of the invention.
Fig. 3 depicts a schematic according to an embodiment of the invention.
Fig. 4 depicts a further exemplary schematic according to other embodiments of the invention.
Fig. 5 depicts a simplified migration scenario according to an embodiment of the invention for a FttH (Fiber to the Home) situation.
Fig. 6 depicts a simplified protocol flow according to an embodiment of the invention.

### Detailed description

Before the automated migration according to the invention is executed, some preparatory non-time-critical actions need to be undertaken. The advantage of these preparations is that they are largely customer independent and operator determined and do not need to take place directly prior or during the migration. In addition they hardly have an effect on the current legacy services the customer consumes.

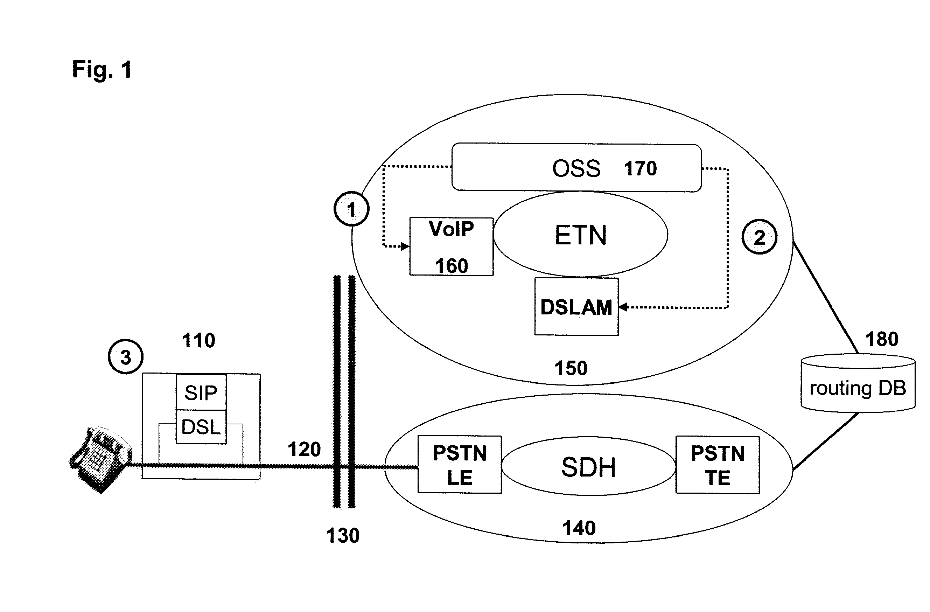

In an embodiment of the invention, wherein a migration of services from a legacy circuit switched telephony network (first network) to a packet switched VoIP based network (second network) is foreseen, in order to create the right default situation for the migration, the pre-migration preparations may comprise one or all of the following activities, with reference to Fig. 1:
- pre-provisioning of a new subscriber account in the VoIP AS platform (action 1);
- preparation and installation of a broadband access to the customer premises based on either ADSL, Ethernet or Fiber, etc. (action 2);
- shipping a dual mode VoIP modem (residential network access device/RNAD) that is either being installed by the customer him/herself (do-it-your self) or installed by the local support team of the telecom operator (action 3).

During this preparatory phase the customer is still able to use voice services via the legacy telephony network. The preparations at the customer premises are independent from the network oriented preparations and may be carried out at the customer's convenience, with only a very brief interruption of the legacy service. The RNAD, when installed, is fully transparent to the existing legacy (PSTN) services (for example POTS, ISDN, fax).

When the correct default pre-migration situation is created, the migration(s) may be executed. A suitable moment may be, when for instance for all customers connected to a PSTN local exchange (PSTN LE), this default situation has been established. An operator may then, customer independent, at a moment that suits him, migrate all customers to the new platform and remove the legacy PSTN local exchange, without having to bother about activities at the customer premises.

Fig. 1 depicts a simplified picture of the network situation after the basic preparations have taken place, before the invention according to an embodiment may be executed. In this exemplary default situation, a residential network access device (RNAD) 110 at the customer premises is connected via an access medium 120 and a Main Distribution Frame (MDF) 130 to a legacy PSTN (CSN) network 140, wherein the network is connected to a routing database (routing DB) 180. The CSN may be implemented on top of a basic SDH network and may comprise several exchanges (PSTN LE, PSTN TE).

Further shown in Fig. 1 is a basic VoIP (PSN) network 150 comprising a VoIP AS platform 160 and an Operating Support System (OSS) 170, wherein the network is connected to a routing database (routing DB) 180. The PSN may be implemented on top of a basic Ethernet network (ETN). The VoIP AS platform, serves hereby as the user agent registration and management system (RMM). The VoIP AS may be based on SoftSwitch design whereby the functions of a RMM that are involved in executing one or more steps according to the invention, the IP session management and the specific VoIP service functions are fully or partially integrated within one or more trusted application servers which reside in the network. Alternatively, the VoIP AS may be based on the IMS architecture or another SIP signaling based architecture whereby the RMM functions and the IP session management are decoupled from the specific VoIP service functions, e.g. number analysis, CLIP/R, Call Waiting, Call Barring, Call Waiting, etc. These services are handled within one or more trusted application servers which reside in the network. The routing DB may be implemented as functions either integrated within a SoftSwitch, or implemented in a separate IN platform or implemented in an ENUM/DNS type of server.

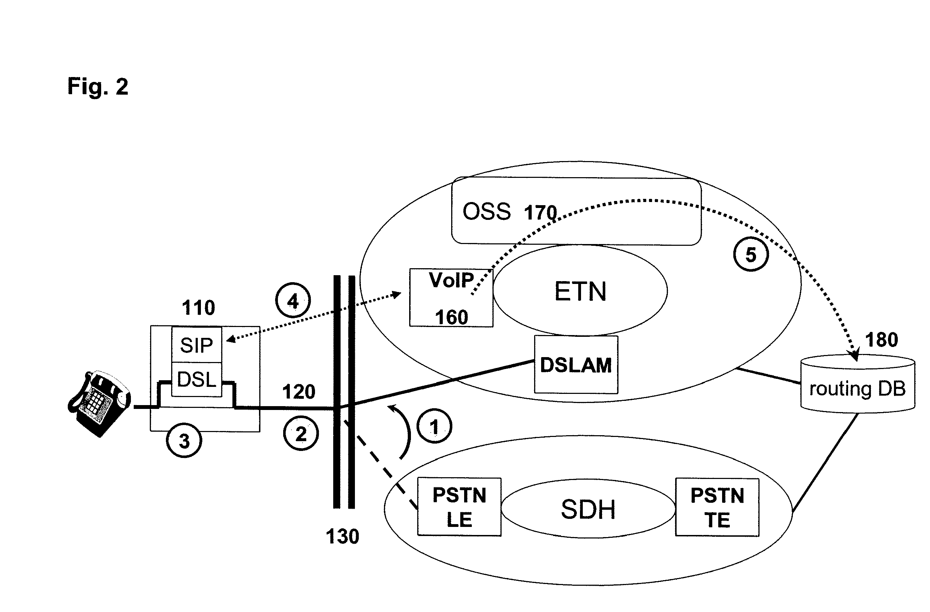

Fig. 2 depicts a simplified migration scenario according to an embodiment of the invention. In this embodiment, the method is illustrated for rewiring (patching) on the Main Distribution Frame (MDF) 130, wherein the PSN access medium is still copper, but the same method may be applied when the physical rewiring to DSLAM equipment is carried out in the Curb (FttC or Fiber to the Curb) or when a migration to a full fiber optical infrastructure (FttH or Fiber to the Home) is required.

With reference to Fig. 2, the actual migration may involve the following actions, wherein only the first step is a manual step and all the other actions are performed automatically. The embodiment of Fig. 2 assumes that the RNAD is already installed before rewiring takes place. In other embodiments the RNAD may be installed after the rewiring, since the invention is based on the insight that it may be advantageous to disconnect (in time) rewiring activities in the network from installation activities at the customer premises, and treat them as independent processes. In a first step (1) a copper access line is rewired to xDSL equipment, such as a DSLAM. On rewiring the access line to the xDSL equipment, the DSL line becomes active (2). In other words: in this step signaling with electromagnetic properties representative of a packet switched network (PSN) is transmitted to the RNAD. Subsequently in response to detecting this type of signaling, the RNAD switches its modus to packet switched signaling processing (PSSP) modus (3). RNAD's with these capabilities do exist in the state of the art, but are only used in fall-back situations. A fall-back situation occurs when the VoIP signaling is disrupted. This known RNAD may then automatically switch to the PSTN band (frequency used for circuit switched signaling). When the VoIP signaling is restored, the RNAD detects this situation and switches back to VoIP (packet switched) signaling processing modus. The latter capability is used in the invention, when in response to the modus change, a SIP User Agent (UA) is activated (4). The automated activation of a UA, upon detecting signaling representative of a packet switched network, is known in the art and for example detailed in the earlier referenced co-pending application EP1912411 (A1). The successful activation and registration of the SIP User account in the VoIP platform is then automatically reported to the Operating Support Systems (OSS) and the routing database is updated (5).

The Operator Support Systems are well known in the art and may generally be described as an collection of transactional IT systems an operator for example uses for tasks like the configuration, maintenance and monitoring of its network. As such the OSS may for example comprise modules (hardware and/or software based) for the configuration of subscriber profiles, fault management, performance management, mediation (the collecting and distribution of billing data). The OSS may also fulfill a mediating role, assisting in the communication between Device Managers, User Agent Registration & Management Systems (such as a VoIP AS), Routing Databases and the like. In addition, the OSS do interwork with the actions in Business Support Systems (BSS) that perform the directly actions with end-users like WEB portals, Voice Response Systems, Billing systems, etc.

The RMM, such as a VoIP AS, may in alternative embodiments have a direct link with the routing database, without the intervention of the OSS.

From the moment the routing database is updated with new routing information, all incoming calls may be routed to the VoIP network (the second network) instead of the legacy PSTN network (the first network). Effectively the service is then fully migrated off the PSTN platform and the legacy equipment may be removed. In embodiments wherein the customer/subscriber/user wishes to keep his legacy PSTN phone, the RNAD may be arranged with VoIP to PSTN emulation or PSTN simulation software. This software is known in the art and may be preinstalled on the RNAD or may be downloaded from the network during the UA activation process. In alternative embodiments, the customer/subscriber/user may already have been using a VoIP phone with embedded PSTN to VoIP emulating functionality. This functionality enables the customer to use a VoIP phone in a PSTN network. If the operator now migrates the services delivered to this customer from the PSTN network to the VoIP network, the customer may simply continue to use the VoIP phone. In these embodiments no emulating functionality in the RNAD is required.

In further embodiments the emulating functionality may be embedded in other components at the customer premises, such as hubs, routers, home gateways. In yet further embodiments the emulating functionality may not be used for converting PSTN into VoIP or vice versa, but may be used to emulate any type of signaling required by a terminal connected to a first or second network.

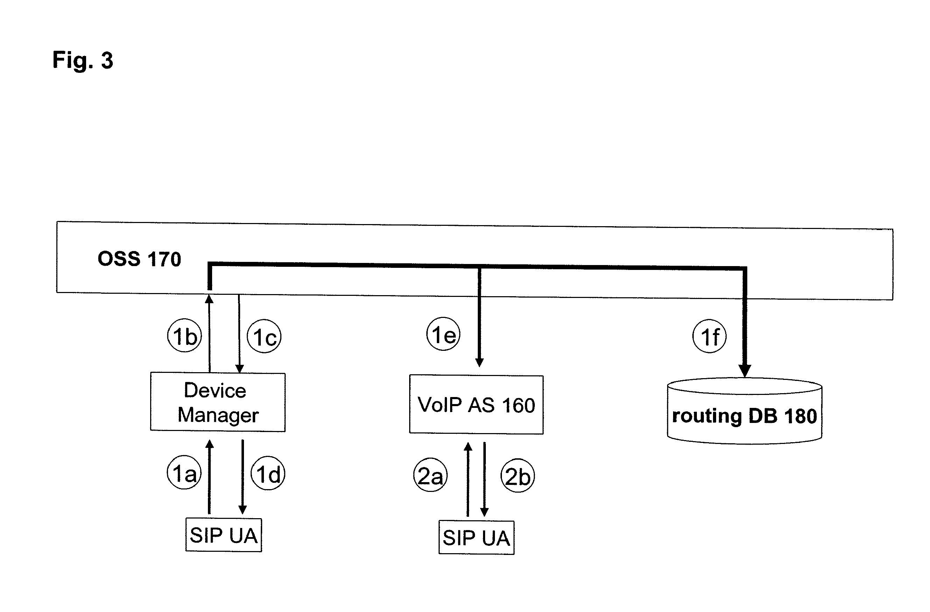

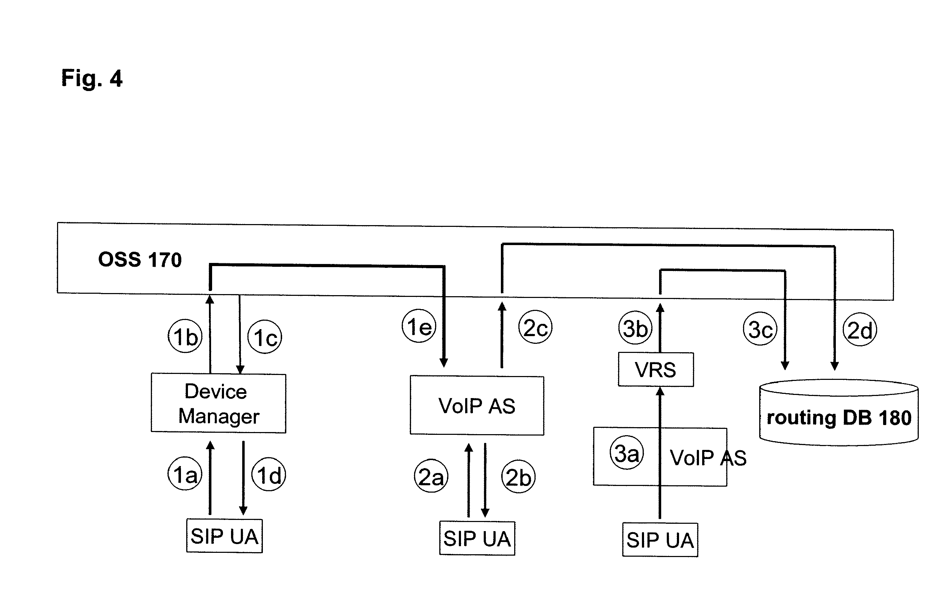

Fig. 3 and Fig. 4 illustrate further exemplary embodiments according to the invention. After the RNAD has switched to PSSP modus upon the detection of signaling with electromagnetic properties representative of a packet switched network, the SIP UA connected to the RNAD internal circuitry that is used for processing this type of signaling, automatically becomes active. The following process steps may then occur: In step 1a the SIP User Agent sends an Activate Request to a Device Manager. This request may be a DHCP broadcast request. In general a Device Manager may also be referred to as a Device Management Server or an Auto Configuration Server (ACS). The Device Manager may be based on the TR-069 standard and use the TR-069 protocol(s) for its operations. The TR-069 protocol is a bidirectional SOAP/HTTP based protocol and it may be used for the communication between customer-premises equipment (e.g. RNAD/CPE/RGE) and Auto Configuration Servers (Device Managers). It includes both a safe auto configuration and the control of other CPE management functions within an integrated framework.

In step 1b the Device Manager forwards the Activate Request together with a user-ID, which may be a line-identifier of the activated PSN access medium, to the Operator Support System (OSS). In step 1c the OSS sends configuration data for the SIP UA to the device manager. These configuration data may comprise subscriber specific data and/or application software. The device manager forwards these configuration data to the SIP UA. The SIP UA is now able to register itself with the VoIP AS (Application Server) platform, provided that the VoIP AS is provisioned with subscriber account data. These subscriber account data may be provisioned during the pre-provisioning process prior to the migration (for example as a batch type process) or alternatively the provisioning may occur in real-time (for example when triggered by the Activate Request (as illustrated by step 1e).

Following the SIP UA configuration, the SIP UA sends a Register Request to the VoIP AS. The VoIP AS checks the subscriber account data and replies with a Register OK message. The SIP UA is now ready to perform outgoing calls via the PSN. Hence one part of the migration is completed.

For the SIP UA to be able to receive also incoming calls, the routing database needs to be updated with new routing information. The trigger for automatically updating the routing database may come out of the SIP UA activation process (as illustrated by step 1f). The OSS 170 may then use the information from the Activate Request to send a routing update message to the routing database.

However in alternative embodiments the trigger for this update may also come from the registration process, or may be generated upon a subscriber making a happy call to for instance a Voice Response System (VRS).

In Fig. 4 these alternatives are further illustrated:
Steps 1a to 2b are already described and need no further explanation. Steps 2c and 2d may be substituted for steps 3a and 3b. In step 2c the VoIP AS forwards the Registration request to the OSS 170. In step 2d the OSS is then triggered to update the routing database 180 by sending a routing update message.

In an alternative embodiment, in step 3a the subscriber makes a 'happy call', using the SIP UA, to the Voice Response System (VRS), whereby the call is routed via the VoIP AS. In step 3b the VRS may then automatically send a message to the OSS, indicating that the subscriber has made a 'happy call' with the newly activated SIP UA. In step 3c the OSS may then send a routing update message to the routing database.

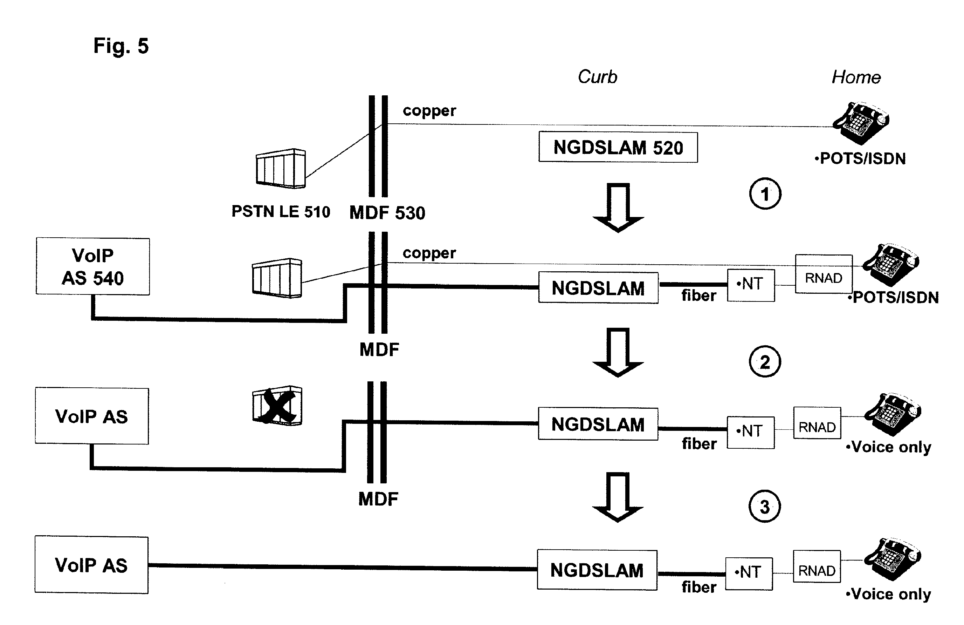

If the proper PSTN emulating functionality is installed and activated in the RNAD, the invention is especially advantageous for customers which prior to the migration do only use PSTN services, and wish to continue to do so after the migration, without changing to new phones or other equipment at the customer premises. The invention may advantageously also be used to migrate fax, telex and other legacy services from for example a CSN to a PSN environment. Also migration from ISDN or Voice over DSL (VoDSL) services to a PSN is feasible. A situation that will occur more and more in the future, is the 'glassification' of the network of an operator. Or in other words, bringing optical fiber closer to the customer premises or even at the customer premises (FttH). Also in these situations seamless migration scenarios according to the invention are possible as further illustrated in Fig. 5.

Fig. 5 depicts a simplified migration scenario according to an embodiment of the invention for a FttH situation.

The FttH situation assumes that an overlay of optical fiber infrastructure has already been installed up to the customer premises (home/office). This infrastructure may comprise of Next Generation DSLAM's (NG DSLAM 520) at the Curb (near by the customer premises), optical fibers, an Optical Distribution Frame (ODF, part of MDF 530). It also assumes the presence of both a legacy Circuit Switched Network (CSN) and a Packet Switched Network (PSN), and furthermore the presence of the necessary network equipment, such as a VoIP AS 540, an OSS and routing database (not drawn). In this situation, the customer still makes use of the legacy PSTN services in the traditional way over a copper access medium which is connected to the CSN. In the CSN a PSTN LE 510 is present for delivering the PSTN services (for example POTS, ISDN, fax). The PSTN LE 510 may for example comprise of 5ESS, AXE or S12 equipment.

In a pre-migration step 1, a RNAD, also referred to as Customer Premises Equipment (CPE) or Residential Gateway Equipment (RGE), is installed at the customer premises. Also in this step, the VoIP AS may be pre-provisioned with subscriber account data.

In this default, pre-migration situation, the customer will still be able to call and receive calls via the lower band (copper access) in the traditional manner, via the CSN.

Subsequently in a migration step 2, the fiber infrastructure that was already installed, is activated (lighted). This may for example be done by patching activities in either the Next Generation DSLAM (NG DSLAM) at the Curb close to the customer premises, or in the MDF, or both. The activation of the fiber, which is the equivalent of transmitting signaling with electromagnetic properties representative of a PSN to the RNAD, will then cause the automatic activation of a SIP UA in the RNAD and the automatic registration and configuration of the SIP UA. The customer is now able to place outgoing calls via the VoIP AS. After the updating of the routing database, all incoming calls will no longer be routed via the legacy PSTN exchange and thus via the legacy CSN to the customer premises, but instead will be routed directly to the VoIP AS and from thereon via the PSN to the customer premises. As a result from this service migration, in a subsequent step 3, the legacy exchange and related equipment and infrastructure (copper cabling for example) may then be removed, provided that all other customer service(s) related to this local (legacy) exchange are also migrated.

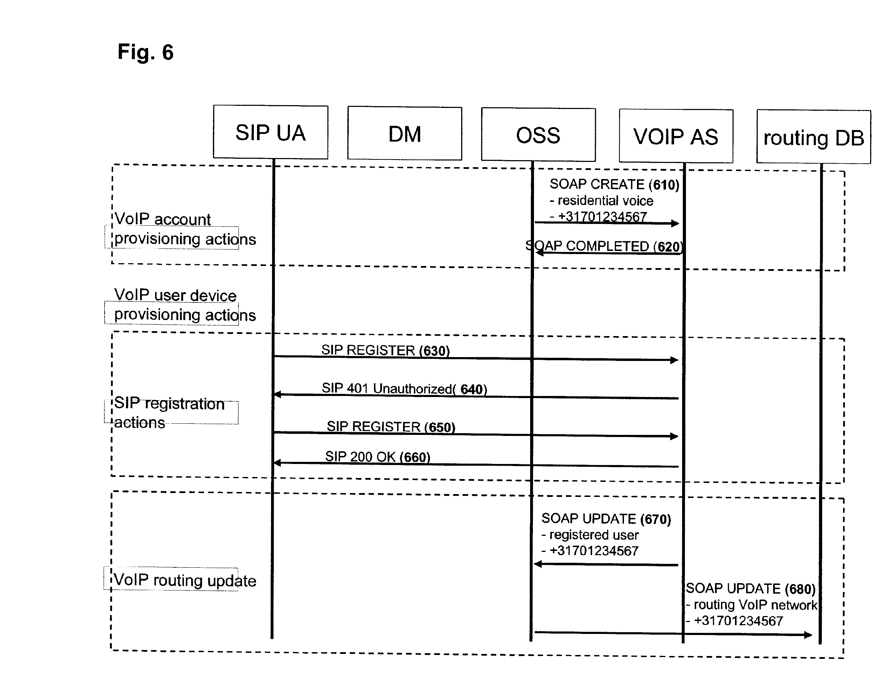

In Fig. 6 is depicted a simplified exemplary protocol flow, illustrating some aspects of an embodiment of the invention. As mentioned before, when migrating to a NG VoIP based network, the VoIP AS needs to be provisioned with subscriber account data at some point in the process. These data may for instance be provisioned in the pre-provisioning process or in response to an activation or configuration request from a User Agent. The provisioning of subscriber account data (also referred to as the activation of a new VoIP account) may involve the sending of a SOAP CREATE message 610 from the OSS to the VoIP AS, which may comprise the relevant subscriber account data, followed by an (optional) SOAP COMPLETED response message 620 from the VoIP AS to the OSS, to let the OSS know that the provisioning was successful.

SOAP is a protocol that may be used in the communication between transactional (IT) systems within an operators network. It may therefore be used for updating subscriber profiles in application servers, updating databases etc. SOAP relies on Extensible Markup Language (XML) as its message format, and usually relies on other Application Layer protocols (most notably Remote Procedure Call (RPC) and HTTP) for message negotiation and transmission. Both SMTP and HTTP are valid application layer protocols used as Transport for SOAP. Also implementations with SOAP over HTTPS or AMQP are foreseen. Other potentially suitable protocols (for instance IIOP) with comparable functionality to SOAP may also be used to implement certain steps of the invention.

The actual configuration of the user agent is not further detailed here, since it is well known in the art.

Following the SIP UA configuration, the SIP UA will perform the SIP Registration procedure through which the SIP UA will become authenticated and authorized by the VoIP AS. As an example of such a procedure, in Fig. 6 the SIP Registration procedure is illustrated based on the challenge/response principle. The SIP Registration procedure starts with sending a SIP REGISTER Request message 630 to the VoIP AS. The VoIP AS responds with a SIP 401 Unauthorized message 640 including a challenge. The SIP UA uses the challenge to calculate the response based on the credentials of the username/password. This response will be included in the SIP REGISTER Request message 650 together with the public credentials of the SIP UA like the list of Public IDs allocated to the end-user. The VoIP AS checks the response to the challenge and stores end-user credentials in the subscriber profile and replies with a SIP 200 OK message 660. The SIP UA is now ready to perform outgoing calls via the PSN. Hence one part of the service migration is completed. For the SIP UA to be able to receive and process also incoming calls, the routing database needs to be updated with new routing information. The sending of the SIP 200 OK message 660, triggers the VoIP AS internally to send a SOAP UPDATE message 670 to the OSS, informing the OSS of a newly registered (and therefore activated) User Agent (VoIP subscriber). This in turn triggers the OSS to send a subsequent SOAP UPDATE message 680 to the Routing Database, with the new routing data. When this update is completed, incoming calls for the subscriber will no longer be routed to the CSN but to the PSN (VoIP network).

The Routing Database may be any suitable database, but is preferably an IN or ENUM/DNS based Routing Database.

The communication between the database and the OSS in this embodiment is demonstrated by using the SOAP protocol. However other implementations, using any suitable protocol, such as RADIUS, Diameter, SQL or proprietary protocols are also possible, without departing from the scope of the invention.

It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the invention, which is defined in the accompanying claims.

## Claims

1. Method for automated service migration from a first network, preferably a circuit switched network (CSN) to a second network, preferably a packet switched network (PSN), the first network connected to a Residential Network Access Device (RNAD) via a first type of signaling with electromagnetic properties representative of the first network, the second network comprising an User Agent Registration and Management Module (RMM) communicatively connected to a routing database, the RNAD comprising a User Agent (UA) and configured for switching between a first signaling processing modus, preferably a circuit switched signaling processing (CSSP) modus and a second signaling processing modus, preferably a packet switched signaling processing (PSSP) modus; the method comprising the steps of;
- switching the RNAD to the second signaling processing modus through transmitting to the RNAD a second type of signaling with electromagnetic properties, representative of the second network.
- in response to the modus switch, activating and configuring the UA and registering the UA with the RMM
- following the activation of the UA, updating the routing database, so that the RNAD may be reached via the second network, preferably the PSN.

2. A method according to claim 1, wherein said switching comprises the detection by the RNAD, of the second type of signaling with electromagnetic properties representative of the second network.

3. A method according to claim 1 or 2, wherein the RNAD comprises emulating functionality for outputting a signal with electromagnetic properties representative of the first network to a terminal.

4. A method according to each of the preceding claims, wherein the RNAD is connected to a physical access medium, and whereby the transmitting to the RNAD of the second type of signaling is started by connecting the physical access medium to a connection point of the second network.

5. A method according to claim 4, wherein the connection point is a DSLAM or an Optical Distribution Frame.

6. A method according to one or all of the preceding claims, wherein the updating of the routing database is done in response to the activation of the UA.

7. A method according to each of claims 1 to 5, wherein the updating of the routing database is done in response to the registration of the UA.

8. A method according to claim 1 to 5, wherein the updating of the routing database is done in response to a call to a Voice Response System.

9. A method according to one or all of the preceding claims, wherein in response to the activation of the UA, the RMM is provisioned with user data for the corresponding UA account.

10. A system arranged for automated service migration from a first network to a second network, comprising
- a RNAD, configured for switching between a first signaling processing modus and a second signaling processing modus;
- a RMM, configured for executing the step of:
i. in response to the activation or registration of an UA, sending a routing update request comprising information for the routing database so that the RNAD becomes reachable via the second network;
- a routing database communicatively connected to the RMM and configured for accepting and handling a routing update request, so that the RNAD may be reached via the second network.

11. A system according to claim 10. further comprising a module for managing the routing database, the module configured for executing at least the steps of; in response to the activation or registration of the UA, receiving a routing update request comprising information for the routing database; in response to said routing update request, updating the routing database with said information so that the RNAD may be reached via the second network.

12. A system according to claim 10 or 11, further comprising a device manager, the device manager configured for executing at least the step of; in response to the activation of a UA, sending a routing update request comprising information for the routing database so that so that the RNAD may be reached via the second network.

13. A RMM, configured for executing the step of:
- in response to the registration of an UA, sending a routing update request comprising routing information for the routing database so that the RNAD may be reached via the second network.

14. A module for managing the routing database, the module configured for executing at least the steps of;
- in response to the activation or registration of the UA, receiving a routing update request comprising routing information for the routing database;
- in response to said routing update request, updating the routing database with said routing information so that the RNAD may be reached via the second network.
